(19) Europäisches Patentamt

European Patent Office

Office européen des brevets

(11) **EP 2 187 554 A1**

(12) **EUROPEAN PATENT APPLICATION**

(43) Date of publication:
**19.05.2010 Bulletin 2010/20**

(51) Int Cl.:
*H04J 11/00* *(2006.01)*

(21) Application number: **10152509.5**

(22) Date of filing: **27.07.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.08.2004 US 600741 P**
**06.05.2005 US 123738**

(62) Document number(s) of the earlier application(s) in accordance with Art. 76 EPC:
**05781896.5 / 1 779 571**

(71) Applicant: **INTERDIGITAL TECHNOLOGY CORPORATION**
**Wilmington, DE 19810 (US)**

(72) Inventors:
• **Koo, Chang-Soo**
  **Melville, NY 11747 (US)**

• **Zhang, Guodong**
  **Farmingdale, NY 11735 (US)**
• **Olesen, Robert Lind**
  **Huntington, NY 11743 (US)**
• **Tsai, Yingming**
  **Booton, NJ 07005 (US)**
• **Huang, Yuejin**
  **Holbrook, NY 11741 (US)**

(74) Representative: **Bratt, Jan Henrik**
**Awapatent AB**
**Järnvägsgatan 10 A**
**P.O. Box 1066**
**S-251 10 Helsingborg (SE)**

Remarks:
This application was filed on 03-02-2010 as a divisional application to the application mentioned under INID code 62.

(54) **Method and system for link adaptation in an orthogonal frequency division multiplexing (OFDM) wireless communication system**

(57)    A method and system for link adaptation in an orthogonal frequency division multiplexing (OFDM) wireless communication system are disclosed. The entire sub-channels are divided into a plurality of groups. A channel quality indicator (CQI) is generated for each group based on channel quality status in each group, and communication parameters are adjusted in accordance with the CQI.

FIG. 5

EP 2 187 554 A1

**Description**

FIELD OF INVENTION

The present invention is related to an orthogonal frequency division multiplexing (OFDM) wireless communication system. More particularly, the present invention is related to a method and system for link adaptation in an OFDM wireless communication system.

BACKGROUND

Current wireless communication systems provide broadband services such as wireless Internet access to subscribers. Those broadband services require reliable and high-rate communications over multi-path fading channels. Orthogonal frequency division multiplexing (OFDM) is one of the solutions to mitigate the effects of multi-path fading. The combination of multiple-input multiple-output (MIMO) and OFDM (OFDM-MIMO) technologies can bring high bandwidth efficiency for local area network (LAN) or wide area network (WAN) environments.

For an efficient operation of wireless communication systems, a link adaptation for communication parameters is required. Link adaptation is an approach for selecting communication parameters, including a coding rate, a modulation scheme, a transmit power or the like, in order to maximize the throughput.

In the OFDM-MIMO systems, water-pouring power/bit allocation (WP) is strongly suggested to maximize downlink capacity. In order to determine the WP schemes properly, not only correlation of sub-channels but correlation of sub-channels' power should be known. The transmission of this information requires considerable overhead. Accordingly, it is desirable to have alternate approaches to signaling such information.

SUMMARY

A method and system for link adaptation in an OFDM wireless communication system is provided. The subchannels are divided into a plurality of groups. A channel quality indicator (CQI) is generated for each group based on channel quality status in each group of sub-channels, and communication parameters on each sub-channel are adjusted in accordance with the CQI.

BRIEF DESCRIPTION OF THE DRAWINGS

Figure 1 shows the correlation $|\rho_k|$ versus k for several typical values of $\alpha$ when P=256.
Figure 2 shows the correlation $|\rho_k|$ versus k for two values of $P$ when $\alpha$ =0.64.
Figure 3 shows the correlation $\gamma_k$ versus k for several typical values of $\alpha$ when P=256.
Figure 4 shows the correlation $\gamma_k$ versus k for two values of $P$ when $\alpha$ =0.64.
Figure 5 is a flow diagram of a process for adjusting communication parameters.

Figure 6 shows generation of $\mathrm{CQI}_q^{(t)}$ for each group of sub-channels.

Figure 7 is a diagram of a system for link adaptation.

DETAILED DESCRIPTION OF THE PREFERRED EMBODIMENTS

Hereinafter, the following embodiments are explained with reference to IEEE 802.11 system. However, it should be noted that the embodiments are not limited to the IEEE 802.11 system, but may be applicable to any wireless communication system.

Suppose $h^{(t,r)} = \{h_0^{(t,r)}, h_1^{(t,r)}, ..., h_{W-1}^{(t,r)}\}$ is a time-domain channel response vector of length W for the channel between the $t$th transmit antenna and the $r$th receive antenna. The average power of the coefficient $h_i^{(t,r)}$ is expressed by $\sigma_l^2 = E\{| h_l^{(t,r)} |^2\}$ which is independent of the values of $t$ and $r$. This is because the size of the antenna array in MIMO systems is usually much less than the propagation distance of the first arrival path.

In IEEE 802.11 a/n, a 20-MHz sampling rate is used, resulting in a 50-ns time resolution of the channel response. Normalized power-delay profile can be expressed as

$$\sigma_l^2 = G^{-1}e^{-l/(\Gamma/50)}$$
$$= G^{-1}e^{-\alpha \cdot l} \quad ,$$

(Equation 1)

where $\alpha = 50/\Gamma$, $G = \sum_{l=0}^{W-1} e^{-\alpha \cdot l} = \dfrac{1-e^{-\alpha \cdot W}}{1-e^{-\alpha}} \approx \dfrac{1}{1-e^{-\alpha}}$ for $\alpha W \gg 1$, and $\Gamma$ in nanoseconds is the power-delay time constant for the paths (clusters).

Summing the average power of the coefficients over the delay spread, W, results in $\sum_{l=0}^{W-1} \sigma_l^2 = 1$. The pa-

rameter $\Gamma$ depends on the propagation distance of the first path ($D_0$) and path loss model of the channel. To evaluate the average power of different paths, the propagation distances of these paths should be known. Because the sampling duration is 50 ns in the foregoing example, the propagation distance between two consecutive paths is 15 meters. Therefore, if $D_l$ denotes the propagation distance of the $l$th path in meters, $D_{l+1} = D_l + 15$ for $l = 0,1,..., W$-2. Without loss of generality, only the power loss ratio of the second path to the first path may be considered, which is defined as

$$R_{loss} = \begin{cases} \left(\dfrac{D_0+15}{D_0}\right)^2 & \text{if } D_0 \le D_{free} \\[4mm] \left(\dfrac{D_0+15}{D_0}\right)^{3.5} & \text{if } D_0 > D_{free} \end{cases} \quad ,$$

(Equation 2)

where $D_{free}$ is the free space propagation distance. When $D_0 \le D_{free,}$ the channel is line-of-sight (LOS). Otherwise, the channel is non-LOS. When $R_{loss}$ is given, the parameter $\alpha$ and power-delay time constant $\Gamma$ can be calculated by solving the equation

$$e^{\alpha} = R_{loss} .$$

(Equation 3)

Assuming $D_{free}$ = 15m, the values of $\alpha$ and $\Gamma$ are shown in Table 1 for several typical values of $D_0$. The average value of $\Gamma$ within a room is approximately 60 ns.

Table 1

| $D_0$ in meters | $\alpha$ | $\Gamma$ in nanoseconds |
|---|---|---|
| 15 | 1.38 | 70 |
| 45 | 1.0 | 50 |
| 75 | 0.64 | 32 |
| 100 | 0.49 | 24 |

Suppose $H^{(t,r)} = \{H_0^{(t,r)}, H_1^{(t,r)},..., H_{P-1}^{(t,r)}\}$ is the frequency-domain channel response vector of length P for the channel between the $t$th transmit antenna and the $r$th receive antenna. In other words, $H^{(t,r)}$ consists of $P$ sub-channels. The $p$th sub-channel can be represented as

$$H_p^{(t,r)} = \sum_{l=0}^{W-1} h_l^{(t,r)} W_P^{l \cdot p}$$ , (Equation 4)

where $W_P = e^{-j2\pi/P}$. The correlation between the $p_1$th and $p_2$th sub-channels is defined as

$$\rho_{p_1,p_2}^{(t,r)} = E\left[ H_{p_1}^{(t,r)} \left( H_{p_2}^{(t,r)} \right)^* \right]$$ . (Equation 5)

Suppose $h_l^{(t,r)}$ is a complex Gaussian variable with zero mean and is independent of $h_m^{(t,r)}$ if $l \neq m$. According to Equation 1,

$$\rho_{p_1,p_2}^{(t,r)} = E\left[ \left( \sum_{l=0}^{W-1} h_l^{(t,r)} W_P^{l \cdot p_1} \right) \cdot \left( \sum_{m=0}^{W-1} (h_m^{(t,r)})^* W_P^{-m \cdot p_2} \right) \right]$$

$$= G^{-1} \sum_{l=0}^{W-1} e^{-\alpha \, l} W_P^{(p_1 - p_2)l}$$ , (Equation 6)

which is independent of the values of $t$ and $r$. Assuming $k = p_1 - p_2$ for $k = 0,1,...,P\text{-}1$ and $\alpha W \gg 1$, Equation 6 can be written as

$$\rho_k = \frac{1 - e^{-\alpha}}{1 - e^{-\alpha} e^{-j2\pi k / P}}$$ . (Equation 7)

The variable $k$ represents the number of sub-channels spaced between the two sub-channels under consideration. From Equation 7,

$$| \rho_k | = \frac{1 - e^{-\alpha}}{\sqrt{1 - 2e^{-\alpha} \cos(2\pi k / P) + e^{-2\alpha}}}$$ . (Equation 8)

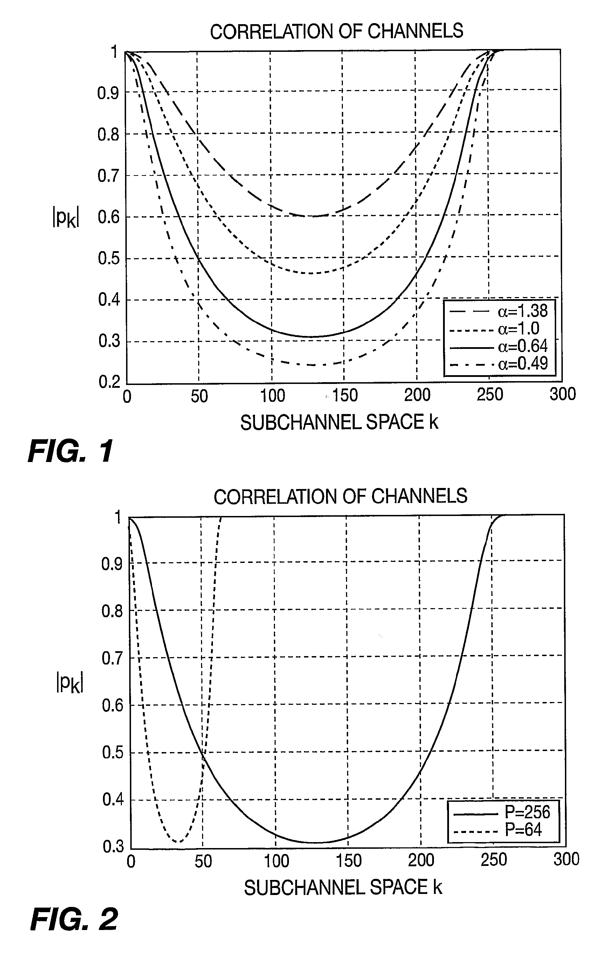

Figure 1 shows the curves of $|\rho_k|$ against k for several typical values of $\alpha$ when P=256. With the decrease of the parameter $\alpha$, the correlation between the two sub-channels spaced with k sub-carriers is reduced. According to Equation 1, the smaller the parameter $\alpha$, the more comparable the average power of the paths. In other words, such a channel consists of more effective multi-paths and therefore the channel becomes more frequency-selective. In the limit case that $\alpha \to 0$, $|\rho_k| \to 0$ for any value of k. On the other hand, if the channel is flat fading (non frequency-selective), $\alpha \to \infty$, resulting in $|\rho_k|$=1 for all values of k.

Figure 2 shows the curves of $|\rho_k|$ versus k for a different number of sub-channels P when $\alpha$ = 0.64. With the decrease of P, the correlation curve becomes narrow linearly. For example, the sub-channels with $|\rho_k| \geq$ 0.9 for P=64 and P=256 have to be spaced less than 4 and 16 sub-carriers, respectively.

In order to use the principle of "water-filling", a measure for CQI must be defined. The CQI should be constructed based on the power of the sub-channels. Although $|\rho_k|$ presents the correlation between two sub-channels spaced by k sub-carriers, it does not show clearly the correlation of the two sub-channels' power. Therefore, the correlation of sub-channels' power should be derived. The correlation of sub-channels' power is defined as

$$\gamma_{p_1,p_2}^{(t,r)} = \frac{E\left[\left|H_{p_1}^{(t,r)}\right|^2 \left|H_{p_2}^{(t,r)}\right|^2\right]}{E\left[\left|H_{p_1}^{(t,r)}\right|^4\right]} .$$

(Equation 9)

With $\alpha W \gg 1$,

$$E\left[\left|H_{p_1}^{(t,r)}\right|^4\right] = 2 - \frac{1-e^{-\alpha}}{1+e^{-\alpha}} ,$$

(Equation 10)

and

$$E\left[\left|H_{p_1}^{(t,r)}\right|^2 \left|H_{p_2}^{(t,r)}\right|^2\right] = 1 - \frac{1-e^{-\alpha}}{1+e^{-\alpha}} + \frac{(1-e^{-\alpha})^2}{1-2e^{-\alpha}\cos(2\pi k/P)+e^{-2\alpha}} ,$$

(Equation 11)

where $k = p_1 - p_2 \in [0, W\text{-}1]$. Equation 10 and Equation 11 are independent of the values of $t$ and $r$. In the derivation of Equation 10 and Equation 11, it is assumed that the real and imaginary parts of a multi-path coefficient, (say $h_p^{(t,r)}$ for $p \in [0, W\text{-}1]$), have the same variance and are independent from each other. Substitution of Equation 10 and Equation 11 into Equation 9 results in

$$\gamma_k = \frac{2e^{-\alpha}[1 - 2e^{-\alpha}\cos(2\pi k/P) + e^{-2\alpha}] + (1-e^{-\alpha})^2(1+e^{-\alpha})}{(1+3e^{-\alpha})(1-2e^{-\alpha}\cos(2\pi k/P)+e^{-2\alpha})} .$$

(Equation 12)

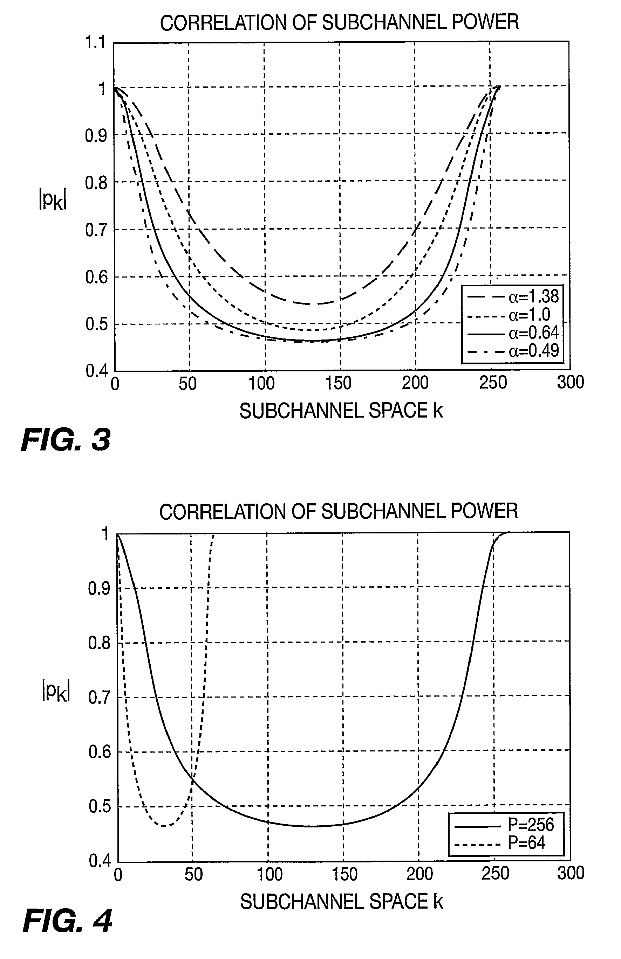

Figure 3 shows the curves of $\gamma_k$ against k for several typical values of $\alpha$ when P=256. From Figure 3, the smallest value of the correlation $\gamma_k$ is around 0.5 at k=P/2. In other words, two sub-channels spaced with P/2 sub-carriers may statistically have about 3 dB differences in power. Therefore, it is not necessary to report the CQI for each of the sub-channels. Figure 4 shows the curves of $\gamma_k$ versus k for a different number of sub-carriers P when $\alpha = 0.64$. The curves are shrunk linearly as the value of P is reduced.

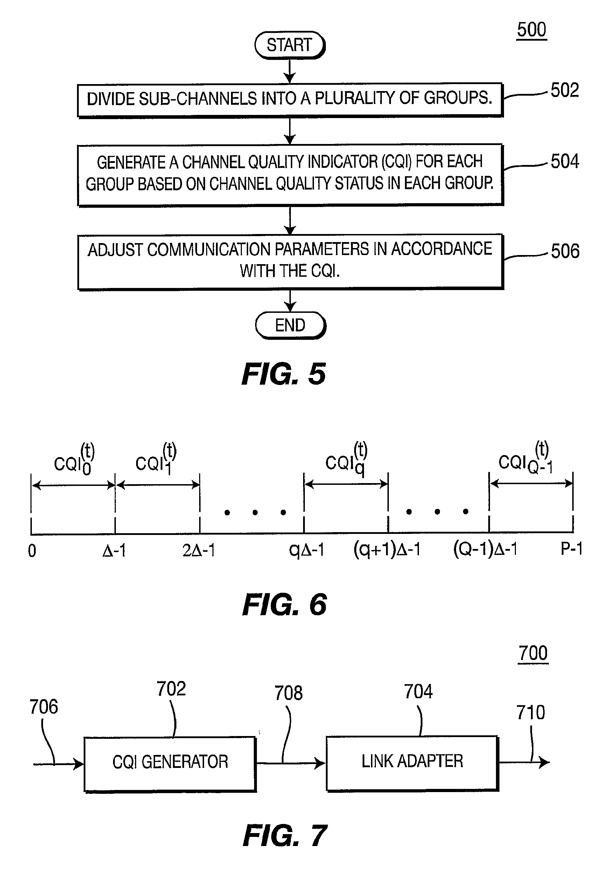

Figure 5 is a flow diagram of a process 500 for link adaptation in accordance with the present invention. Sub-channels are divided into a plurality of groups (step 502). Figure 6 shows a scheme for generating the CQI in each group of sub-channels. In Figure 6, the total sub-channels are divided into Q groups and each group consists of $\Delta$ consecutive sub-channels with $\Delta = P/Q$. The correlation of the sub-channels' power in a group for different values of Q is shown in Table 2.

Table 2

| The values of $Q$ | $\gamma_k$ for $0 \le k \le \Delta$ - 1 | Statistical differences in power between two sub-channels in a group |
|---|---|---|
| 20 | $\ge 0.9$ | 0.46 dB |
| 16 | $\ge 0.8$ | 0.97 dB |

(continued)

| The values of $Q$ | $\gamma_k$ for $0 \le k \le \Delta - 1$ | Statistical differences in power between two sub-channels in a group |
|---|---|---|
| 8 | $\ge 0.6$ | 2.22 dB |

A CQI is generated for each group based on channel quality status in each group (step 504). The channel quality status may be analyzed by different methods including, but not limited to, a signal-to-noise ratio (SNR), a bit error rate (BER), a packet error rate (PER), or the like. Hereinafter, the following embodiment is explained with reference to an SNR. However, it should be understood that other methods may be implemented alternatively. Assuming that $\mathrm{CQI}_q^{(t)}$ denotes the $q$th CQI of the $t$th transmit antenna ($q = 0,1,...,Q-1$ and $t = 0,1,...,N_T-1$), $\mathrm{CQI}_q^{(t)}$ is preferably calculated as

$$\mathrm{CQI}_q^{(t)} = B + \left\lfloor 10 \log_{10}(\mathrm{SNR}_q^{(t)}) \right\rfloor , \qquad \text{(Equation 13)}$$

where $\lfloor x \rfloor$ is the largest integer smaller or equal to x, B is an integer which should be determined based on system requirements. SNR is calculated as

$$\mathrm{SNR}_q^{(t)} = \frac{1}{\sigma^2} \sum_{r=0}^{N_R-1} \sum_{l=0}^{\Delta-1} \left| H_{l+q\Delta}^{(t,r)} \right|^2 . \qquad \text{(Equation 14)}$$

$N_R$ is the number of receive antennas and $\sigma^2$ is the noise variance in each sub-channel.

The CQI is fed back to adjust communication parameters (step 506). Since CQI is generated based on the sub-channels in a group, total number of $Q \times N_T$ CQIs are generated in a transmission frame (packet), where $N_T$ is the number of transmit antennas. It is not necessary to report CQI on an OFDM symbol basis, since the channel may change little in a frame (packet) interval; and due to common phase error (CPE) invoked by the combination of RF oscillator and the phase-locked loop, the phase of the channel responses may change. However, such a change does not affect the power of the sub-channels. Therefore, the CQI can be calculated based on the channel responses estimated from the long training sequences on a frame basis without using the pilot tones inserted in OFDM symbols. The inserted pilot tones are used only for the purpose of correcting the CPE.

For example, if each of the CQI indicates one of four states that correspond to the modulation schemes (BPSK, QPSK, 16 QAM, 64 QAM), a number of $2 \times Q \times N_T$ bits are required to report all of the CQIs. In a typical case that Q = 16 and $N_T$ = 4, $2 \times Q \times N_T$ = 128 bits are required to report the CQIs. This is reasonable as compared to the number of data in a transmission frame. Alternatively, the CQI may represent a combination of two or more communication parameters, such as a combination of a coding rate and a modulation order.

Because any pair of sub-channels statistically has a maximum of 3 dB differences in power, the CQI reported according to Equation 13 may be more meaningful for the change of coding rates rather than modulation schemes. Therefore, the modulation scheme may be kept constant for all the sub-channels while adjusting the coding rate according to the reported CQI for different groups of the sub-channels. In this case, the modulation scheme may be determined according to

$$\mathrm{M}^{(t)} = C + \left\lfloor 10 \log_{10}(\mathrm{SNR}^{(t)}) \right\rfloor , \qquad \text{(Equation 15)}$$

where C is an integer which should be determined based on system requirements. SNR is determined as follows:

$$\text{SNR}^{(t)} = \frac{1}{\sigma^2} \sum_{r=0}^{N_R-1} \left| H_0^{(t,r)} \right|^2 = \frac{1}{N_R} \sum_{r=0}^{N_R-1} \sum_{l=0}^{W-1} \left| h_l^{(t,r)} \right|^2 . \qquad \text{(Equation 16)}$$

Optionally, after channel estimation, paths with relatively strong power may be selected. After the selection of the paths having relatively strong power, the number of effective paths is reduced to M that is usually less than W. Suppose

$$G_m^{(t)} = \sum_{r=0}^{N_R-1} h_m^{(t,r)} \ \text{ for } m \in [0, M-1]$$

is the effective channel response and $K$ is the vector indicating the locations of the M paths. With $G_m^{(t)}$ and $K$, first all the sub-channels of each antenna can be calculated using Equation 3 and then the modulation and coding schemes can be decided for optimization. Optionally the MIMO channel matrix of a reference sub-carrier may be transmitted so that calibration can be made.

Some embodiments for selecting and indexing the reference subcarriers are as follows. In one embodiment, the network configures the reference subcarriers and the index of the subcarrier(s) are known to both the network and the subscriber. Accordingly, typically, the index of the reference subcarrier(s) is not reported to the transmitter. In another embodiment, the receiver can dynamically choose reference subcarriers based on instantaneous channel transfer functions of all subcarriers and other factors in the spectrum. The receiver chooses the index of the reference subcarrier and reports the index to the transmitter.

Figure 7 is a diagram of a system 700 for link adaptation. The system 700 comprises a CQI generator 702 and a link adaptor 704. The CQI generator 702 generates a CQI based on channel quality status of received signals 706 via each group of sub-channels. A CQI 708 generated by the CQI generator 702 is forwarded to the link adaptor 704 for generating control signals 710 for adjusting communication parameters. The communication parameters include, but are not limited to, a coding rate, a modulation mode, a transmit power level or the like. The link adaptor 704 may comprise a look-up table for adjusting communication parameters in accordance with the input CQI. The CQI generator 702 may reside at a wireless transmit/receive unit (WTRU), base station or both. The link adapter may reside at a WTRU, base station or both.

The MIMO-OFDM transmitter and/or receiver of the above embodiments may be used in a WTRU or base station. The transmitter and/or receiver elements may be implemented as a single integrated circuit (IC), multiple ICs, logical programmable gate array (LPGA), discrete components or a combination of any of these IC(s), LPGA, and/or discrete components.

A WTRU includes but is not limited to a user equipment, mobile station, fixed or mobile subscriber unit, pager, or any other type of device capable of operating in a wireless environment. A base station includes but is not limited to a Node-B, site controller, access point or any other type of interfacing device in a wireless environment.

Although the features and elements of the present invention are described in the preferred embodiments in particular combinations, each feature or element can be used alone without the other features and elements of the preferred embodiments or in various combinations with or without other features and elements of the present invention.

EMBODIMENTS

1. A method for adjusting a communication link. in an orthogonal frequency division multiplexing (OFDM) wireless communication system, the method comprising:

dividing sub-channels into a plurality of groups;
generating a channel quality indicator (CQI) for each group based on channel quality status in each group; and
adjusting communication parameters in accordance with the CQI.

2. The method of embodiment 1 wherein the CQI is generated based on one of a signal-to-noise (SNR) ratio, a bit error rate (BER), and a packet error rate (PER).

3. The method of embodiment 1 wherein the number of groups is determined in accordance with a correlation of sub-channels · power.

4. The method of embodiment 1 wherein the CQI is calculated based on channel responses estimated from long training sequences on a frame basis.

5. The method of embodiment 1 wherein a coding rate for each sub-channel is adjusted in accordance with the CQI corresponding to the sub-channel.

6. The method of embodiment 5 wherein a modulation mode for each sub-channel is also adjusted in accordance with the CQI corresponding to the sub-channel.

7. The method of embodiment 1 wherein a modulation mode for all sub-channels is adjusted in accordance with a modulation mode indicator generated based on the entire sub-channels.

8. The method of embodiment 1 wherein the CQI represents a combination of two or more communication parameters.

9. The method of embodiment 1 further comprising a step of selecting a path with relatively strong power, whereby an effective channel response of the selected paths and a vector indicating the location of the selected paths are transmitted for adjusting the communication parameters.

10. The method of embodiment 1 wherein a multiple-input multiple-output (MIMO) channel matrix of a reference sub-carrier is transmitted for calibration at a transmitting station.

11. A system for link. adaptation in an orthogonal frequency division multiplexing (OFDM) wireless communication system, comprising:

> a CQI generator for generating a channel quality indicator (CQI) for each group of sub-channels based on channel quality status of each group, the sub-channels being divided into a plurality of groups; and
> a link adaptor for adjusting communication parameters in accordance with the CQI.

12. The system of embodiment 11 wherein the CQI for each group is generated from one of a signal-to-noise (SNR) ratio, a bit error rate (BER) and a packet error rate (PER).

13. The system of embodiment 11 wherein the number of groups is determined in accordance with a correlation of sub-channels' power.

14. The system of embodiment 11 wherein the CQI is calculated based on channel responses estimated from long training sequences on a frame basis.

15. The system of embodiment 11 wherein a coding rate for each sub-channel is adjusted in accordance with the CQI corresponding to the sub-channel.

16. The system of embodiment 15 wherein a modulation mode for each sub-channel is also adjusted in accordance with the CQI corresponding to the sub-channel.

17. The system of embodiment 11 wherein a modulation mode for all sub-channels is adjusted in accordance with a modulation mode indicator generated based on the entire sub-channels.

18. The system of embodiment 11 wherein the CQI represents a combination of two or more communication parameters.

19. The system of embodiment 11 wherein the link. adaptor comprises a look-up table for adjusting communication parameters in accordance with the CQI.

20. The system of embodiment 11 further comprises a means for selecting a path having relatively strong power, whereby an effective channel response of the selected path and a vector indicating the location of the selected paths are transmitted for adjusting the communication parameters.

21. The system of embodiment 11 wherein a multiple-input multiple-output (MIMO) channel matrix of a reference sub-carrier is transmitted for a calibration at a transmitting station.

22. An orthogonal frequency division multiplexing (OFDM) wireless transmit/receive unit (WTRU) comprising:

> a CQI generator for generating a channel quality indicator (CQD for each group of sub-channels based on channel quality status of each group, the sub-channels being divided into a plurality of groups, the CQI being transmitted so that transmission communication parameters can be adjusted in accordance with the CQI.

23. The WTRU of embodiment 22 wherein the CQI for each group is generated from one of a signal-to-noise (SNR) ratio, a bit error rate (BER) and a packet error rate (PER).

24. The WTRU of embodiment 22 wherein the number of groups is determined in accordance with a correlation of sub-channels' power.

25. The WTRU of embodiment 22 wherein the CQI is calculated based on channel responses estimated from long training sequences on a frame basis.

26. The WTRU of embodiment 22 wherein the CQI represents a combination of two or more communication parameters.

27. The WTRU of embodiment 22 further comprises a means for selecting a path having relatively strong power, whereby an effective channel response of the selected path and a vector indicating the location of the selected paths are transmitted for adjusting the communication parameters.

**Claims**

1.  A method (500) for adjusting a communication link in wireless communications, the method comprising:

    using an OFDM waveform comprising a plurality of sub-carriers;
    dividing (502) the plurality of sub-carriers into a plurality of groups of sub-carriers; and
    the method being **characterised by** further comprising:

    obtaining one, and only one, channel quality indicator, CQI, (708) for each group of sub-carriers, the CQI being calculated based on error rates from each of the sub-carriers of the group; and
    adjusting (506) communication link parameters in accordance with the obtained CQIs.

2.  The method of claim 1 wherein the error rates are bit error rates, BERs, or packet error rates, PERs.

3.  The method of claim 1 wherein the CQI (708) is based on a power of each group of sub-carriers.

4.  The method of claim 1 wherein the CQI (708) is calculated based on channel responses estimated from training sequences on a frame basis.

5.  The method of claim 1 wherein a coding rate for each group of sub-carriers is configured to adjust in accordance with the CQI (708) corresponding to each group of sub-carriers.

6.  The method of claim 5 wherein a modulation mode for each group of sub-carriers is configured to adjust in accordance with the CQI (708) corresponding to each group of sub-carriers.

7.  The method of claim 1 wherein a modulation mode for the plurality of groups of sub-carriers is configured to adjust in accordance with a modulation mode indicator generated based on the plurality of groups of sub-carriers.

8.  The method of claim 1 wherein the CQI (708) represents a combination of two or more communication parameters.

9.  The method of claim 1 wherein a multiple-input multiple-output, MIMO, channel matrix of a reference sub-carrier is transmitted to enable calibration.

10. An access point, AP, for link adaptation in OFDM wireless communications wherein a plurality of sub-carriers are divided (502) into a plurality of groups of sub-carriers, the access point being **characterised by** comprising:

    a CQI generator (702) configured to generate (504) one, and only one, channel quality indicator, CQI, (708) for each group of sub-carriers, the CQI being calculated based on error rates from each of the sub-carriers of the group; and
    a link adaptor (704) configured to adjust (506) communication link parameters in accordance with the generated CQIs (708).

11. The AP of claim 10 wherein the CQI generator (702) generates the CQI (708) based on a bit error rate, BER, or a packet error rate, PER.

12. The AP of claim 10 wherein the CQI generator (702) is configured to generate the CQI (708) based on a power of each group of sub-carriers.

13. The AP of claim 10 wherein the CQI generator (702) is configured to generate the CQI (708) based on channel responses estimated from training sequences on a frame basis.

14. The AP of claim 10 wherein the link adaptor (704) is configured to adjust a coding rate for at least one group of the plurality of groups of sub-carriers in accordance with the CQI (708) corresponding to the at least one group of the plurality of groups of sub-carriers.

**15.** The AP of claim 14 wherein the link adaptor (704) is configured to adjust a modulation mode for at least one group of the plurality of groups of sub-carriers in accordance with the CQI (708) corresponding to the at least one group of the plurality of groups of sub-carriers.

**16.** The AP of claim 10 wherein the link adaptor (704) is configured to adjust a modulation mode for the plurality of groups of sub-carriers in accordance with a modulation mode indicator based on the plurality of groups of sub-carriers.

**17.** The AP of claim 10 wherein the CQI generator (702) generates the CQI (708) based on a combination of two or more communication parameters.

**18.** The AP of claim 10 wherein the link adaptor (704) comprises a look-up table configured to adjust (506) communication parameters in accordance with the CQI (708).

**19.** The AP of claim 10 wherein a multiple-input multiple-output, MIMO, channel matrix of a reference sub-carrier is transmitted to enable a calibration.

**20.** An OFDM wireless transmit/receive unit, WTRU, comprising:

a CQI generator (702) configured to generate (504) one, and only one, channel quality indicator, CQI, (708) for each of a plurality of groups of sub-carriers into which groups a plurality of sub-carriers are divided (502), wherein the CQI (708) is calculated based on error rates from each of the sub-carriers of the respective group , the CQIs (708) being transmitted so that transmission communication link parameters are adjusted (506) in accordance with the CQIs.

**21.** The WTRU of claim 20 wherein the CQI generator (702) generates the CQI (708) based on a bit error rate, BER, or a packet error rate, PER.

**22.** The WTRU of claim 20 wherein the CQI generator (702) is configured to generate the CQI (708) based on a power of each group of sub-carriers.

**23.** The WTRU of claim 20 wherein the CQI generator (702) is configured to generate the CQI (708) based on channel responses estimated from training sequences on a frame basis.

**24.** The WTRU of claim 20 wherein the CQI generator (702) generates the CQI (708) based on a combination of two or more communication parameters.

FIG. 1

FIG. 2

CORRELATION OF SUBCHANNEL POWER

**FIG. 3**

CORRELATION OF SUBCHANNEL POWER

**FIG. 4**

<u>500</u>

START

DIVIDE SUB-CHANNELS INTO A PLURALITY OF GROUPS. —502

GENERATE A CHANNEL QUALITY INDICATOR (CQI) FOR EACH
GROUP BASED ON CHANNEL QUALITY STATUS IN EACH GROUP. —504

ADJUST COMMUNICATION PARAMETERS IN ACCORDANCE
WITH THE CQI. —506

END

**FIG. 5**

$CQI_0^{(t)}$ $\quad$ $CQI_1^{(t)}$ $\quad$ $CQI_q^{(t)}$ $\quad$ $CQI_{Q-1}^{(t)}$

$0 \qquad \Delta\text{-}1 \qquad 2\Delta\text{-}1 \qquad q\Delta\text{-}1 \qquad (q+1)\Delta\text{-}1 \qquad (Q\text{-}1)\Delta\text{-}1 \qquad P\text{-}1$

**FIG. 6**

<u>700</u>

706 $\qquad$ 702 $\qquad$ 708 $\qquad$ 704 $\qquad$ 710

CQI GENERATOR $\longrightarrow$ LINK ADAPTER

**FIG. 7**

**Europäisches Patentamt**
**European Patent Office**
**Office européen des brevets**

# EUROPEAN SEARCH REPORT

Application Number

EP 10 15 2509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/141466 A1 (KIM YOUN-SUN [KR] ET AL) 22 July 2004 (2004-07-22)<br>* paragraphs [0006], [0055], [0056] *<br>* figure 8 *<br>----- | 1-24 | INV.<br>H04J11/00 |
| A | EP 1 410 526 B1 (QUALCOMM INC [US]) 21 April 2004 (2004-04-21)<br>* paragraphs [0021], [0024], [0025], [0031], [0044], [0045], [0143] *<br>----- | 1-24 | |
| A | MING LEI ET AL: "Subband bit and power loading for adaptive OFDM"<br>VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1482-1486, XP010702474<br>ISBN: 0-7803-7954-3<br>* I. Introduction *<br>* B. "Sorted Subband Grouping" Method *<br>----- | 1-24 | |
| A | US 2003/086371 A1 (WALTON JAY R [US] ET AL) 8 May 2003 (2003-05-08)<br>* paragraph [0035] *<br>----- | 1-24 | TECHNICAL FIELDS SEARCHED (IPC)<br><br>H04L |

The present search report has been drawn up for all claims

| Place of search | Date of completion of the search | Examiner |
|---|---|---|
| Munich | 8 April 2010 | Belloni, Paolo |

EPO FORM 1503 03.82 (P04C01)

## ANNEX TO THE EUROPEAN SEARCH REPORT
## ON EUROPEAN PATENT APPLICATION NO.

EP 10 15 2509

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2010

| Patent document cited in search report | | Publication date | Patent family member(s) | | Publication date |
|---|---|---|---|---|---|
| US 2004141466 | A1 | 22-07-2004 | KR 20040063532 | A | 14-07-2004 |
| EP 1410526 | B1 | 24-05-2006 | AT 327599 | T | 15-06-2006 |
| | | | BR 0210656 | A | 05-10-2004 |
| | | | CN 1535508 | A | 06-10-2004 |
| | | | DE 60211705 | T2 | 11-01-2007 |
| | | | EP 1410526 | A1 | 21-04-2004 |
| | | | JP 2004531980 | T | 14-10-2004 |
| | | | JP 2009165126 | A | 23-07-2009 |
| | | | TW 223516 | B | 01-11-2004 |
| | | | WO 03001702 | A1 | 03-01-2003 |
| US 2003086371 | A1 | 08-05-2003 | AU 2002354000 | A1 | 19-05-2003 |
| | | | BR 0213781 | A | 13-10-2004 |
| | | | CN 1611028 | A | 27-04-2005 |
| | | | EP 1440533 | A2 | 28-07-2004 |
| | | | JP 2005510904 | T | 21-04-2005 |
| | | | KR 20050056911 | A | 16-06-2005 |
| | | | TW 253813 | B | 21-04-2006 |
| | | | WO 03041330 | A2 | 15-05-2003 |

EPO FORM P0459

For more details about this annex : see Official Journal of the European Patent Office, No. 12/82